# FASCICULE DE BREVET EUROPEEN

(11) **EP 0 543 755 B1**
(45) Date de publication et mention de la délivrance du brevet: **03.05.1995**
(21) Numéro de dépôt: 92420432.4
(22) Date de dépôt: 20.11.1992
(51) Int. Cl.: F16H 1/32

(54) **Réducteur de vitesse du type cycloidal pour robots et autres manipulateurs industriels**
Epizyklisches Untersetzungsgetriebe für Roboter und andere Industriemanipulatoren
Epicyclic reduction gearing for robots and other industrial manipulators

(30) Priorité: 21.11.1991 FR 9114610
(43) Date de publication de la demande: 26.05.1993
(73) Titulaire: S.A. DES ETABLISSEMENTS STAUBLI (France), 74210 Faverges (FR)
(72) Inventeur: Gerat, Vincent, F-74410 Saint Jorioz (FR)
(74) Mandataire: Monnier, Guy

(56) Documents cités:
- EP-A- 0 305 535
- EP-A- 0 315 609
- DE-A- 2 112 631

## Description

La présente invention a trait aux réducteurs de vitesse destinés à assurer l'actionnement angulaire des organes mobiles des robots, manipulateurs industriels, plateaux rotatifs d'usinage et autres applications analogues

On sait que dans ce type d'appareils, il est prévu pour chaque organe mobile une chaîne cinématique comprenant un arbre d'entrée entraîné par un moteur autonome et réuni, à travers un réducteur de vitesse, à un arbre de sortie solidaire de l'organe mobile considéré. Comme la vitesse de rotation de l'arbre d'entrée est très supérieure à celle désirée pour l'arbre de sortie, on a ordinairement recours à des réducteurs du type cycloïdal.

On rappellera qu'un réducteur cycloïdal classique comprend en principe au moins un excentrique (en fait, on a le plus souvent recours à deux excentriques opposés afin d'obtenir un meilleur équilibrage des efforts) qui est lié à l'arbre d'entrée en vue d'assurer par rotation la commande d'une came circulaire dont la périphérie est prévue dentée afin de coopérer avec une denture fixe, le nombre des dents de cette denture fixe étant très légèrement supérieur (en pratique d'une unité) à celui de la périphérie de la came. A cette dernière sont en outre associés des doigts d'actionnement qui sont portés par un plateau lié angulairement à l'arbre de sortie et qui sont engagés à l'intérieur de logements ménagés dans la came (ou, dans le cas ordinaire de deux cames parallèles, dans un logement défini par deux ouvertures conjuguées des deux cames).

On comprend que le mouvement primaire appliqué par l'arbre d'entrée à l'excentrique oblige la came dentée correspondante à rouler sur la denture extérieure fixe et à assurer ainsi, à travers les doigts d'actionnement, l'entraînement de l'arbre de sortie suivant un rapport qui dépend du nombre de dents de ladite came et de la différence de ce nombre par rapport à celui de ladite denture fixe, ladite came reculant de cette différence pour un tour de l'excentrique.

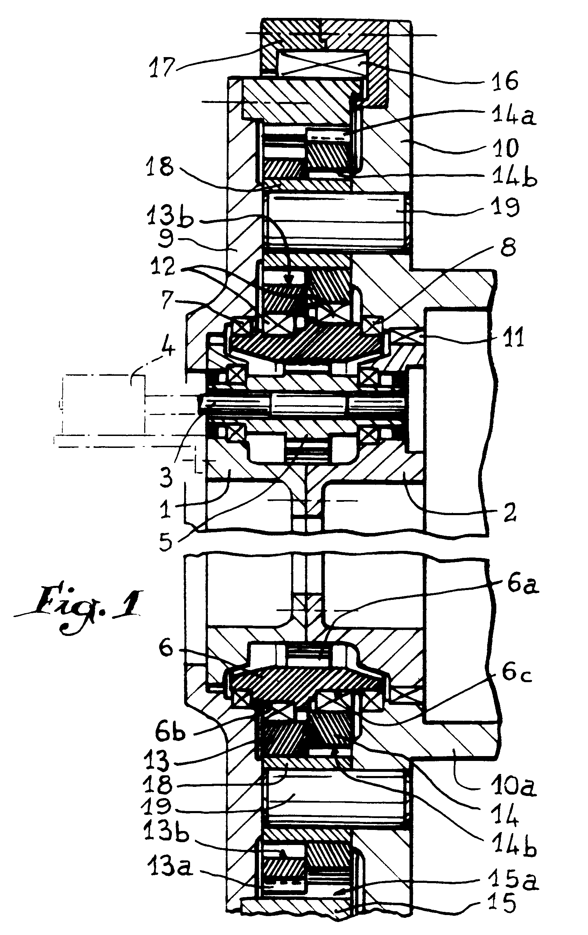

On a schématiquement rappelé à la fig. 1 du dessin annexé aux présentes la structure généralement adoptée pour un réducteur cycloïdal à deux excentriques.

Le bâti fixe du réducteur considéré est constitué par l'assemblage de deux pièces 1 et 2 à profil annulaire. Ce bâti 1-2 supporte un arbre d'entrée 3 qui est entraîné en rotation par un moteur schématisé en 4 et sur lequel est calé un pignon 5. Ce dernier engrène avec la denture intérieure 6a d'une bague 6, disposée coaxialement autour du bâti 1-2 en étant supportée par deux roulements 7 et 8 respectivement montés le premier dans un couvercle fixe 9 solidaire du bâti 1-2, le second dans un plateau tournant 10. Ce plateau 10 est porté par le bâti 1-2 à l'aide d'un roulement 11 et il est pourvu, à l'opposé du plateau fixe 9, d'une bride annulaire 10a formant arbre de sortie pour le réducteur.

La paroi extérieure de la bague 6 est usinée pour présenter deux portées annulaires excentrées 6b et 6c, les excentrations étant disposées à l'opposé l'une de l'autre. Sur chacune de ces portées est montée, avec interposition d'un roulement 12, une came 13, respectivement 14, qui est établie à un profil annulaire et dont la périphérie est prévue dentée de façon à coopérer avec la denture intérieure d'une couronne fixe 15. La denture 15a de la couronne fixe 15 comporte un nombre de dents très légèrement supérieur (en fait d'une ou de deux unités) à celui des dentures 13a et 14a des cames 13 et 14, ces dernières étant à cet effet établies à un diamètre primitif légèrement inférieur au diamètre primitif de la paroi intérieure de ladite couronne 15.

Afin d'assurer un guidage convenable du plateau tournant 10 sur les parties fixes de l'ensemble, le bord extérieur dudit plateau est prévu débordant par rapport à la couronne 15 solidaire du couvercle 9 et il reçoit un roulement 16 maintenu en place à l'aide d'un couvercle annulaire 17.

Chacune des cames dentées 13 et 14 est percée d'une série d'ouvertures circulaires 13b, 14b. Une fois les ouvertures des deux cames amenées en coïncidence les unes par rapport aux autres, on a introduit dans chacun des logements ainsi définis un doigt d'actionnement constitué, dans la construction classique illustrée en fig. 1, par une douille 18 montée folle, à jeu aussi réduit que possible, sur un support cylindrique ou axe 19, lequel est porté par le plateau 10.

Le fonctionnement correct d'un tel système implique le recours à des pièces qui exigent un usinage précis, suivi d'une rectification très poussée. Par ailleurs, il est pratiquement impossible de faire en sorte que le couple soit simultanément transmis par plusieurs doigts 18-19, ce qui conduit à augmenter les dimensions du dispositif.

C'est à ces inconvénients qu'entend remédier la présente invention qui a également pour but de simplifier la construction des réducteurs cycloïdaux du type envisagé, de réduire l'encombrement de ceux-ci et d'en améliorer le fonctionnement.

Le réducteur suivant l'invention est défini à la revendication 1.

En fait l'invention consiste à maintenir la bague porte-excentriques dans le bâti fixe par un roulement unique prévu au niveau de l'une de ses extrémités afin de former pivot, tandis que l'extrémité opposée prend appui contre les roulements interposés entre les excentriques et les cames dentées elles-mêmes en appui contre la couronne dentée fixe par l'intermédiaire des dentures desdites cames. En même temps on réalise les doigts d'actionnement engagés dans les logements définis par les cames, sous la forme d'organes cylindriques qui disposent sur leur support d'un jeu notable, lequel autorise lors de l'assemblage l'auto-centrage de chacun desdits organes dans son logement.

Le dessin annexé, donné à titre d'exemple, permettra de mieux comprendre l'invention, les caractéristiques qu'elle présente et les avantages qu'elle est susceptible de procurer :
Comme indiqué plus haut, fig. 1 est une coupe axiale schématique illustrant l'agencement d'un réducteur cycloïdal établi conformément à la construction classique.
Fig. 2 montre de la même manière la structure générale d'un réducteur réalisé conformément à la présente invention.
Fig. 3 est une coupe transversale à plus grande échelle suivant le plan indiqué en III-III en fig. 2.

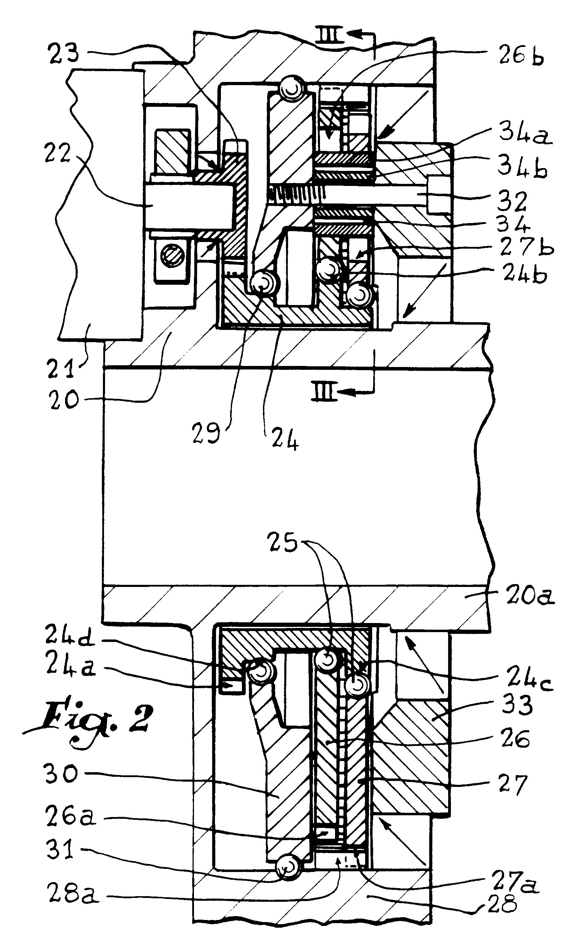

En fig. 2, la référence 20 désigne le bâti ou carter fixe du réducteur, lequel bâti est équipé d'un moteur d'entraînement 21 sur l'arbre 22 duquel est calé un pignon 23 ; celui-ci engrène avec la denture arrière 24a d'une bague 24. Cette dernière entoure la partie annulaire centrale 20a du bâti 20 et elle comporte, à l'opposé de la denture 24a, deux portées excentrées 24b et 24c dont les excentricités sont orientées à 180° l'une par rapport à l'autre.

Comme dans la construction suivant fig. 1, chacune des portées excentrées ou excentriques 24b et 24c est pourvue d'un roulement 25 pour le montage d'une came 26, respectivement 27, dont la périphérie est prévue dentée pour coopérer avec la denture intérieure 28a d'une couronne 28, rigidement fixée au bâti 20 concentriquement à la partie annulaire 20a de celui-ci. Bien entendu, la denture 28a comporte un nombre de dents très légèrement supérieur à celui de chaque denture 26a, 27a des cames 26 et 27.

Pour le montage de la bague 24 dans le bâti 20, on a recours, suivant l'invention, à un roulement ou palier unique 29 qui est engagé sur une portée annulaire 24d ménagée sur ladite bague immédiatement au droit de la denture d'extrémité 24a. La piste extérieure de ce roulement unique 29 prend appui contre l'ouverture axiale d'un disque tournant 30 monté dans le bâti 20 à l'aide d'un roulement 31.

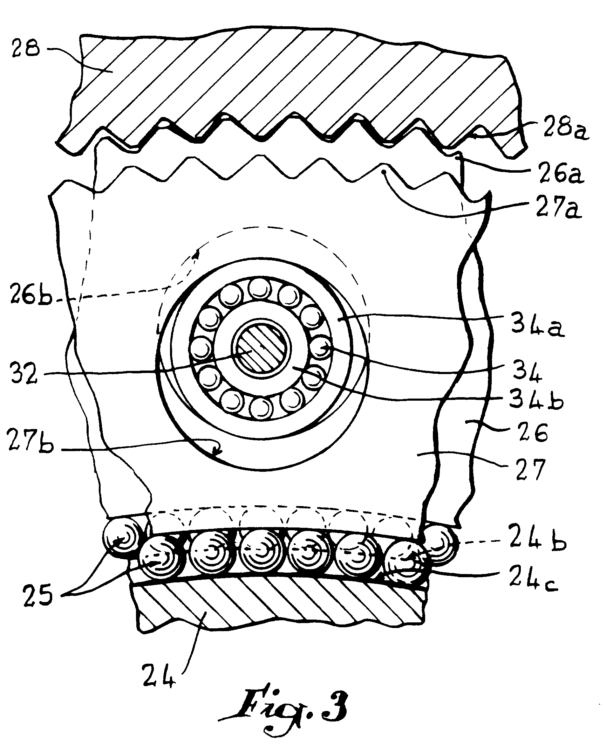

Chaque came 26 et 27 est découpée d'une série d'ouvertures circulaires 26b, 27b (cf. fig. 3) amenées en coïncidence afin de déterminer une série correspondante de logements pour les doigts d'actionnement du réducteur. Chacun de ces doigts est constitué par un boulon 32 qui est vissé latéralement dans le disque 30 et dont la tête prend appui contre une douille 33 formant arbre de sortie pour le réducteur.

Entre le disque 30 et la douille 33, chaque boulon 32 supporte un roulement 34 dont la piste extérieure 34a est engagée dans le logement défini par les ouvertures 26b et 27b, tandis que sa piste intérieure 34b est montée avec un jeu notable sur le boulon 32 précité.

Le fonctionnement général du réducteur suivant l'invention est substantiellement identique à celui de l'appareil décrit en référence à fig. 1, à savoir que la rotation de la bague 24 sous l'effet du moteur 21 produit, par l'intermédiaire des cames dentées 26 et 27 en prise avec la couronne fixe 28, la commande des doigts 33-34 et l'entraînement à vitesse lente de la douille 33.

On comprend toutefois que l'unicité du roulement 29 associé à la bague 24 permet une construction simplifiée de l'ensemble du mécanisme. L'encombrement de celui-ci est réduit, en même temps que l'inertie des pièces qui tournent à grande vitesse est limitée. En outre, le fonctionnement est amélioré, en ce sens que le roulement unique 29 agit à la manière d'un pivot pour la bague 24 qui prend appui par l'intermédiaire des cames dentées 26 et 27 contre la couronne 28 en évitant toute contrainte. Le jeu dont disposent les roulements 34 sur leur support 32 assure lors de l'assemblage l'auto-centrage des doigts d'actionnement 32-34 dans leur logement 26b-27b et autorise cet appui de la bague 24 sur les cames dentées, sans qu'il soit nécessaire de recourir à un usinage très précis suivi d'une rectification serrée.

## Revendications

1. Réducteur de vitesse du type cycloïdal pour robots et autres manipulateurs industriels, du genre comprenant d'une part une bague porteexcentriques (24) liée à l'arbre d'entrée (22) pour assurer par rotation la commande de deux cames opposées (26, 27) pourvues à leur périphérie d'une denture (26a, 27a) qui coopère avec une denture fixe (28a) dont le nombre de dents est très légèrement supérieur à celui de la denture périphérique de chaque came, d'autre part une série de doigts d'actionnement (32-34) qui sont engagés dans des logements (26b-27b) prévus dans lesdites cames et qui sont portés par l'organe de sortie (33) du mécanisme, caractérisé en ce que la bague (24) qui porte les excentriques (24b, 24c) est maintenue dans le bâti fixe (20) par un roulement unique (29) prévu au niveau de l'une de ses extrémités afin de former pivot, tandis que l'extrémité opposée prend appui contre les roulements (25) interposés entre lesdits excentriques et les cames (26, 27) elles-mêmes en appui contre la denture fixe (28a), et en ce que les doigts d'actionnement sont constitués par des organes cylindriques (34) qui disposent sur leur support (32) d'un jeu notable autorisant, lors de l'assemblage l'auto-centrage de chacun desdits organes dans son logement (26b-27b).

2. Réducteur suivant la revendication 1, caractérisé en ce que chaque doigt d'actionnement est formé par un roulement dont la piste intérieure (34b) est engagée avec jeu sur un boulon (32) qui est simultanément supporté par une douille annulaire (33) formant organe de sortie et par un disque tournant (30) formant support extérieur pour le roulement unique (29) constituant pivot pour la bague tournante (24).

3. Réducteur suivant l'une quelconque des revendications 1 et 2, caractérisé en ce que chaque organe cylindrique (34) est monté à rotation sur son support (32).

## Claims

1. A speed-reducer of the cycloidal type for robots and other industrial manipulators, of the type comprising firstly an eccentric-bearing ring (24) connected to the input shaft (22) to ensure by rotation the control of two opposed cams (26, 27) provided on their periphery with teeth (26a, 27a) which cooperate with fixed teeth (28a), the number of teeth of which is very slightly greater than that of the peripheral teeth of each cam, and secondly a series of actuating fingers (32-34) which are engaged in receptacles (26b-27b) provided in said cams and which are borne by the output member (33) of the mechanism, characterised in that the ring (24) which bears the eccentrics (24b, 24c) is held in the fixed supporting structure (20) by a single rolling bearing (29) provided at the level of one of its ends in order to form a pivot, whereas the opposite end bears against the bearings (25) interposed between said eccentrics and the cams (26, 27) themselves bearing against the fixed teeth (28a), and in that the actuating fingers are formed by cylindrical members (34) which have a significant play on their support (32) which permits, during assembly, the self-centring of each of said members in its receptacle (26b-27b).

2. A speed-reducer according to Claim 1, characterised in that each actuating finger is formed by a bearing, the inner raceway (34b) of which is engaged with play on a bolt (32) which is simultaneously supported by an annular bush (33) forming an output member and by a rotary disc (30) forming an outer support for the single bearing (29) forming a pivot for the rotary ring (24).

3. A speed-reducer according to any one of Claims 1 and 2, characterised in that each cylindrical member (34) is mounted to rotate on its support (32).

## Patentansprüche

1. Epizyklisches Untersetzungsgetriebe für Roboter und andere Industriemanipulatoren, von der Art die einerseits einen mit der Eingangswelle (22) verbundenen Exzenterträgerring (24) umfaßt, um durch Drehung die Steuerung von zwei entgegengesetzten Nocken (26, 27) zu bewirken, an ihrer Peripheri mit einer Verzahnung (26a, 27a) versehen, die mit einer festen Verzahnung (28a) zusammenwirkt, deren Zahnezahl sehr geringfügig größer ist als die der peripheren Verzahnung von jeder Nocke, und andererseits eine Serie von Betätigungsfingern (32-34), die in Aufnahmen (26b-27b) sitzen, vorgesehen in besagten Nocken und getragen durch das Ausgangsorgan (33) des Mechanismus,
**dadurch gekennzeichnet**,
daß der Ring (24), der die Exzenter (24b, 24c) trägt, in dem festen Gestell (20) gehalten wird durch ein einziges Lager (29), an einem seiner Enden vorgesehen um ein Drehgelenk zu bilden, während sich das entgegengesetzte Ende abstützt auf den Lagern (25), eingefügt zwischen die genannten Exzenter und die Nocken (26, 27), selbst abgestützt auf der festen Verzahnung (28a), **und dadurch**, daß die Betätigungsfinger gebildet werden durch zylindrische Organe (34), die auf ihrem Träger (32) über ein beträchtliches Spiel verfügen, das beim Zusammenbau die Selbstzentrierung eines jeden der besagten Organe in seiner Aufnahme (26b-27b) zuläßt.

2. Untersetzungsgetriebe nach Anspruch 1, dadurch gekennzeichnet, daß jeder Betätigungsfinger gebildet wird durch ein Lager, dessen Innenring (34b) mit Spiel auf einer Durchsteckschraube sitzt, die zur gleichen Zeit getragen wird durch eine ringförmige Hülse (33), das Ausgangsorgan bildend, und durch eine Drehscheibe (30), die den äußeren Träger bildet für das einzige Lager (29), das das Drehgelenk bildet für den drehbaren Ring (24).

3. Untersetzungsgetriebe nach einem der Ansprüche 1 und 2, dadurch gekennzeichnet, das jedes zylindrische Organ (34) drehbar auf seinem Träger (32) angebracht ist.
